# EUROPÄISCHE PATENTANMELDUNG

(11) **EP 1 324 577 A2**
(43) Veröffentlichungstag der Anmeldung: **02.07.2003**
(21) Anmeldenummer: 02028970.8
(22) Anmeldetag: 24.12.2002
(51) Int. Cl.: H04M 1/725, H04Q 7/32

(54) **Mobile, am Körper tragbare, codierbare Sende/Empfangseinheit sowie Verfahren zur Telekommunikation per Sprachübertragung**

(30) Priorität: 31.12.2001 DE 10164545
(71) Anmelder: Graml, Josef, 92280 Kastl (DE); Limmer, Rudolf, 95100 Selb (DE); Castner, Arno, 90607 Rückersdorf (DE); Simon, Thomas, 92318 Neumarkt/Opf. (DE)
(72) Erfinder: Graml, Josef, 92280 Kastl (DE); Limmer, Rudolf, 95100 Selb (DE); Castner, Arno, 90607 Rückersdorf (DE); Simon, Thomas, 92318 Neumarkt/Opf. (DE)
(74) Vertreter: Weber, Joachim, Dr.

(57) **Zusammenfassung**

Die vorliegende Erfindung betrifft eine Mobile, am Körper tragbare, codierbare Sende-/Empfangseinheit zur Telekommunikation per Sprachübertragung und/oder Datenübertragung, umfassend eine von einem Mikroprozessor (2) gesteuerte Sendeeinheit (3), eine von dem Mikroprozessor (2) gesteuerte Empfangseinheit (4) und eine Codier-/Decodiervorrichtung (5) zum Festlegen mindestens eines Sendecodes und zur Überprüfung von Empfangscodierungen sowie Speicherelementen (6'), in welchen zur Absendung vorbereitete und/oder empfangene Codes und/oder Sprachdaten speicherbar sind, wobei eine Vergleichereinrichtung (7) vorgesehen ist, durch welche codierte Daten von zwei im wesentlichen gleichartigen, derartigen Sende-/Empfangseinheiten (1) auf zumindest teilweise Übereinstimmung vergleichbar sind und bei zumindest teilweiser Übereinstimmung ein Signal auslösbar ist, wobei beim Feststellen von teilweiser Übereinstimmung abgespeicherter Datensätze in beiden Sende-/Empfangseinheiten (1) durch Betätigen einer Eingabetaste (8) (Kontakttaste) der ersten Sende-/Empfangseinheit (1) erste abgespeicherte Datensätze übertragbar sind und bei Betätigung einer Eingabetaste (9) an der zweiten Sende-/Empfangseinheit (1) bei Empfang der gesendeten ersten Datensätze automatisch ein Signal erzeugt und zurückgesendet wird, um die geplante Kontaktaufnahme abzubrechen.

## Beschreibung

Die vorliegende Erfindung betrifft eine mobile, am Körper tragbare, codierbare Sende-/Empfangseinheit zur Telekommunikation per Sprachübertragung und/oder Datenübertragung mit den weiteren Merkmalen des Oberbegriffes des Patentanspruchs 1. Die Erfindung betrifft außerdem ein Verfahren zur Telekommunikation per Sprachübertragung und/oder Datenübertragung mittels mindestens zwei Sende-/Empfangseinheiten mit den weiteren Merkmalen des Oberbegriffes des Patentanspruchs 10.

Es sind bereits Sende-/Empfangseinheiten in Taschenformat bekannt, die der Sprach- und/oder Datenübertragung dienen. Diese Sende-/Empfangseinheiten umfassen eine von einem Mikroprozessor gesteuerte Sendeeinheit, eine von einem Mikroprozessor gesteuerte Empfangseinheit sowie eine Codier/Decodiervorrichtung zum Festlegen mindestens eines Sendecodes und zur Überprüfung von Empfangscodierungen. Ferner weisen diese Sende/Empfangseinheiten Speicherelemente auf, in welchen zur Absendung vorbereitete und/oder empfangene Codes und/oder Sprachdaten speicherbar sind, wobei eine Vergleichervorrichtung vorgesehen ist, durch welche codierte Daten von zwei im wesentlichen gleichartigen, derartigen Sende-/Empfangseinheiten auf zumindest teilweise Übereinstimmung vergleichbar sind und bei zumindest teilweiser Übereinstimmung ein Signal auslösbar ist. Derartige Sende/Empfangseinheiten dienen üblicherweise der Kontaktanbahnung auf der Suche nach einem bestimmten Wunschpartner. Eine solche codierbare Sende/Empfangseinheit zur Kontaktanbahnung ist aus der DE 44 18 234 bekannt.

Aus der DE 197 48 681 ist ein Netzwerk zur Übertragung von Daten bestehend aus mobilen Datenübertragungseinrichtungen bekannt, die jeweils eine Datensende- und -empfangseinheit sind. Ein Datensatz wird über das Datenübertragungsnetz von einer Anfangsdatenübertragungseinrichtung zu einer zweiten Zieldatenübertragungseinrichtung über eine Entfernung übertragen, die größer ist als die Sendereichweite einer einzelnen Datenübertragungseinrichtung. Dabei dienen mindestens eine oder mehrere weitere Datenübertragungseinrichtungen als Zwischenträger für den zu übertragenden Datensatz.

Die Aufgabe der vorliegenden Erfindung besteht darin, die Diskretion bei der Kontaktanbahnung mittels einer Sende-/Empfangseinheit zu erhöhen und die Suche mittels der Sende-/Empfangseinheit effektiver zu gestalten.

Diese Aufgabe wird durch die gesamte Lehre der Patentansprüche 1 und 10 gelöst. Vorteilhafte Weiterbildungen der Sende-/Empfangseinheit ergeben sich aus den Unteransprüchen 2 - 9 Vorteilhafte Weiterbildungen des Verfahrensanspruches ergeben sich aus Patentanspruch 11.

Erfindungsgemäß ist es vorgesehen, daß beim Feststellen von teilweiser Übereinstimmung abgespeicherter Datensätze in beiden Sende/Empfangseinheiten durch Betätigen einer Eingabetaste (Kontakttaste) der ersten Sende-/Empfangseinheit erste abgespeicherte Datensätze (z. B. Telefonnummer, Handy-Nummer, SMS, E-mail-Adresse, elektronische Visitenkarte, Name, Alter usw.) übertragbar sind und bei Betätigung einer Eingabetaste an der zweiten Sende-/Empfangseinheit bei Empfang der gesendeten ersten Datensätze automatisch ein Signal erzeugt und zurückgesendet wird, um die geplante Kontaktaufnahme abzubrechen. Diese Funktion ist besonders dann vorteilhaft, wenn der Besitzer der Sende-/Empfangseinheit bei der Signalabgabe sich gerade in einem Gespräch oder auch nur in Gesellschaft anderer Personen befindet.

Insbesondere kann die zweite Sende-/Empfangseinheit auf einen "harmlosen" Suchmodus umgeschaltet werden und demnach nicht sofort ein Signal aussenden, sobald übereinstimmende Daten vorliegen. Die Kontaktanbahnung ist mittels der erfindungsgemäßen Sende-/Empfangseinheit mit einer erhöhten Diskretion verbunden, ohne daß die Einheit komplett ausgeschaltet werden muß. Die Maßnahme zur Abbrechung der Kontaktaufnahme kann in einfacher Weise nur mittels des Betätigens einer Eingabetaste erfolgen. Das Abbrechen der Kontaktaufnahme kann auch gleichzeitig die Funktion auslösen, daß ein weiteres automatisches Versenden von Daten der Gegeneinheit verhindert wird. Dieses Versenden der restlichen Daten kann zu einem späteren Zeitpunkt erfolgen, wenn die zweite Sende-/Empfangseinheit sich wieder im vollen aktiven Modus befindet.

Mit besonderem Vorteil können bei durch die Vergleichereinrichtung festgestellten übereinstimmenden Datensätzen durch Betätigen einer Eingabetaste einer Sende-/Empfangseinheit stufenweise Datenteilmengen im Speicher der anderen Sende-/Empfangseinheit abgefragt werden. Beispielsweise sind Name, Alter, Wohnort, Telefonnummer, Hobbies und dergleichen in dieser Reihenfolge in jeder Sende-/Empfangseinheit gespeichert und der Empfänger der Daten kann diese Datenmengen in dieser Reihenfolge hintereinander abrufen oder auch nur bestimmte Datenteilmengen abfragen. So kann der Empfänger der Daten beispielsweise sofort auf die Kategorie Hobbies gehen und so eine Vorauswahl treffen, ohne daß zunächst Name, Alter und Wohnort angezeigt werden. Die Kontaktanbahnung kann damit wesentlich effektiver gestaltet werden.

Ebenso kann es für die sendende Sende-/Empfangseinheit vorgesehen sein, daß diese nur bestimmte Datenmengen gezielt stufenweise freigibt. Der Sender hat demnach die Möglichkeit, vorab nur bestimmte Daten wie z. B. die Beschreibung seiner Hobbis und/oder seines Alters abzusenden, ohne seine komplette Identifizierung preiszugeben. Die Sende-/Empfangseinheit erlaubt demnach eine Kontaktanbahnung, bei welcher eine gewisse Anonymität sichergestellt ist.

Insbesondere kann durch das Betätigen einer Eingabetaste an der Sende/Empfangseinheit jede Stufe an Datenmengen gesondert freigebbar sein. Die Datenmengen können dabei in einer bestimmten Reihenfolge freigebbar sein, die von dem Sender individuell festgelegt werden kann.

Mit besonderem Vorteil kann eine Datenübertragung erst bei Betätigen der jeweiligen Kontakttaste an beiden Sende-/Empfangseinheiten innerhalb einer bestimmten Zeitspanne erfolgen. Bei zumindest teilweiser Übereinstimmung gibt die jeweilige Vergleichereinrichtung zunächst nur an der jeweiligen Sende/Empfangseinheit ein Signal ab. Ist die jeweilige Person tatsächlich bereit, Ihre Daten preiszugeben, kann sie dies innerhalb einer bestimmten Zeitspanne mittels Betätigen der jeweiligen Kontakttaste tun. Dabei werden dann nur die vorher freigegebenen persönlichen Daten (z. B. E-mail-Adresse, Telefonnummer, Bild usw.) abgesendet.

Vorteilhafterweise können bestimmte empfangene Daten vor dem Vergleich in der Vergleichereinrichtung ausschließbar sein. Beispielsweise können mittels dieser Funktion bekannte Identifikationsnummern ausgeschlossen werden, womit z. B. eine Tochter das Gerät des Bruders oder des Vaters von der Suche ausklammem kann.

Besonders vorteilhaft ist eine weitere Ausführungsvariante, bei welcher unterschiedliche Daten unterschiedlich gewichtet werden können. So ist z. B. für eine Person das Hobby einer anderen Person wichtiger, als z. B. deren Alter. Sucht z. B. eine Person einen Partner zum Tennis spielen, so kann es für sie unwichtig sein, wie alt der Partner ist. Der Faktor Hobby kann demnach mit über 50% gewichtet werden, wobei die anderen Daten entsprechend niedriger gewichtet sind. Die Gewichtung kann auch derart erfolgen, daß ein bestimmtes Kriterium unbedingt erfüllt sein muß, sonst findet keine Kontaktaufnahme statt.

Ferner kann es vorgesehen sein, daß ein bestimmtes Kriterium vorhanden sein sollte oder vorhanden sein darf oder keinesfalls vorhanden sein darf. Demnach kann es vorkommen, daß beim Empfang oder fehlenden Empfang von bestimmten Daten (Merkmale, Eigenschaften usw.) trotz Übereinstimmung der anderen Daten kein Signal auslösbar ist. Insbesondere können für den Benutzer der Sende/Empfangseinheit vorab Charaktereigenschaften, Vorlieben und andere Merkmale oder Daten eingegeben werden, bei deren Vorhandensein es keinesfalls zu einer Kontaktaufnahme kommen soll. Bei sochen Daten kann es sich z. B. um das Alter, das Geschlecht, Vorlieben oder wie bereits erwähnt um eine bestimmte Identifikationsnummer der anderen Sende-/Empfangseinheit handeln. Beispielsweise kann damit eine Kontaktaufnahme zwischen heterosexuellen Männern ausgeschlossen werden, die zwar die gleichen Vorlieben und dasselbe Alter haben, jedoch auf der Suche nach einer Frau sind.

Vorteilhafterweise können bestimmte Suchprofile für bestimmte Zwecke (z. B. Partnersuche, Suche von Hobbypartnern wie z. B. Reise-, Musik- oder Tanzpartnern, Suche von Interessenten für bestimmte Events oder Suche nach Gesinnungsgenossen und dergleichen) festlegbar und/oder abrufbar sein. Innerhalb der Partnersuche kann auch ein bestimmtes Suchprofil eingegeben werden, wobei z. B. zwischen einer festen Beziehung, lockeren Beziehung, Freundschaft, Sexualbeziehung, One-night-stand oder auch "für alle Kategorien aufgeschlossen" differenziert werden kann. Mit besonderem Vorteil ist es auch möglich, daß der Benutzer der Sende-/Empfangseinheit sein Gerät tagsüber ausschließlich für geschäftliche Suchkategorien verwendet und sein Gerät nach Feierabend auf den Privat-Modus umschaltet. Damit kann vermieden werden, daß es z. B. in der Firma oder zu Hause zu unerwünschten Kontaktaufnahmen kommt.

Mit Vorteil kann ein Navigations- und/oder Ortungssystem (z. B. GPS oder dergleichen) in die Sende-/Empfangseinheit integriert sein. Dadurch hat der Benutzer die Möglichkeit, für unterschiedliche Lokalitäten, welche auch über ein Ortungssystem erkannt werden können, jeweils darauf zugeschnittene Suchprofile zu definieren. Damit kann z. B. die Suche nach einer Arbeitsstelle, einem Geschäftstreffen, einer Diskothek oder einem Café usw. erleichtert werden.

Es können auch bestimmte Suchprofile ortsabhängig definierbar sein, womit die Suche auch effizienter gestaltet werden kann.

Mit besonderem Vorteil kann der aktuelle Standort der Sende-/Empfangseinheit an eine andere Sende-/Empfangseinheit übermittelbar sein. Ist beispielsweise die kontaktierte Person in einem nächstliegenden Café, so kann das erste Treffen sofort in dem Café stattfinden.

Um die kontaktierte Person leichter auffinden zu können, kann mindestens ein besonderes aktuelles Merkmal des Benutzers einer Sende-/Empfangseinheit an eine andere Sende-/Empfangseinheit übermittelbar sein. Bei dem besonderen Merkmal kann es sich z. B. um die Beschreibung von Kleidungsstücken (z. B. "roter Pulli") handeln, so daß sich die kontaktierten Personen auch in der Realität sofort finden. In einer Kurzbeschreibung des Absenders kann dieser auch seinen Spitznamen, seine Haarfarbe, Größe und/oder ein anderes besonderes Erkennungsmerkmal eingeben und an die andere Sende-/Empfangseinheit übermitteln.

Außerdem kann es vorgesehen sein, daß der Grad der Übereinstimmung der miteinander verglichenen Daten bestimmbar ist. Demnach können beide Benutzer sofort ablesen, wie nahe ihr Gegenüber dem gewünschten/gesuchten Idealpartner kommt. Der Vorteil dabei ist, daß die eigentliche Suchfunktion dann nicht nur passiv (d. h. automatischer Alarm nur bei zufälliger Übereinstimmung), sondern auch aktiv (Anzeige des Grades der Übereinstimmung) ausgelöst und genutzt werden kann, womit die Suche erfolgreicher gestaltet werden kann.

Vorteilhafterweise ist der Grad der Übereinstimmung der miteinander verglichenen Daten auf einer Anzeigeeinrichtung ablesbar.

Eine Schutzfunktion (z. B. mittels Paßwort) kann gegen unbefugte Benutzung oder unbefugte Einsicht in die Datenbank vorgesehen sein. Auch bei einem Verlust der Sende-/Empfangseinheit kann der Eigentümer sichergehen, daß seine Daten nicht mißbraucht werden.

Zur optimalen Datenübertragung kann die Sende-/Empfangseinheit UMTS (Universal Mobile Telecommunication System)-fähig oder UMTS-vergleichbar sein.

Das erfindungsgemäße Verfahren zur Telekommunikation per Sprachübertragung und/oder Datenübertragung mittels mindestens zwei der oben beschriebenen Sende-/Empfangseinheiten zeichnet sich dadurch aus, daß beim Feststellen von teilweiser Übereinstimmung abgespeicherter Datensätze in beiden Sende/Empfangseinheiten durch Betätigen einer Eingabetaste (Kontakttaste) der ersten Sende-/Empfangseinheit teilweise abgespeicherte Datensätze übertragen werden und bei Betätigung einer Eingabetaste an der zweiten Sende-/Empfangseinheit bei Empfang der gesendeten ersten Datensätze automatisch ein Signal erzeugt und zurückgesendet wird, um die geplante Kontaktaufnahme abzubrechen. Die Vorteile dazu wurden oben bereits erläutert. Vorteilhafte Ausführungsvarianten dieses Verfahrens ergeben sich ebenfalls aus der obigen Beschreibung zur erfindungsgemäßen Sende-/Empfangseinheit.

Die Erfindung ist anhand eines vorteilhaften Ausführungsbeispiels in der Zeichnungsfigur näher erläutert. Diese zeigt eine Übersichtsdarstellung über die wesentlichen Komponenten der Sende-/Empfangseinheit.

Die erfindungsgemäße, mobile, am Körper tragbare, codierbare Sende/Empfangseinheit 1 dient zur Telekommunikation per Sprachübertragung und/oder Datenübertragung und weist eine von einem Mikroprozessor 2 gesteuerte Sendeeinheit 3 auf, eine von dem Mikroprozessor 2 gesteurte Empfangseinheit 4 und eine Codier-/Decodiervorrichtung 5 zum Festlegen mindestens eines Sendecodes und zur Überprüfung von Empfangscodierungen auf. In den Speicherelementen 6' des Speichers 6 sind zur Absendung vorbereitete und/oder empfangene Codes und/oder Sprachdaten speicherbar. In einer Vergleichereinrichtung 7 sind codierte Daten von zwei im wesentlichen gleichartigen, derartigen Sende-/Empfangseinheiten 1 auf zumindest teilweise Übereinstimmung vergleichbar, wobei bei zumindest teilweiser Übereinstimmung ein Signal am Signalgeber 13 auslösbar ist. Die andere Sende-/Empfangseinheit 1, die von einer anderen Person benutzt wird, stimmt mit der dargestellten Sende/Empfangseinheit 1 überein und ist daher nicht nochmals zeichnerisch dargestellt. Es besteht nun die Möglichkeit, daß beim Feststellen von teilweiser Übereinstimmung abgespeicherter Datensätze in beiden Sende/Empfangseinheiten 1 durch Betätigen der Eingabetaste 8 (sogenannte Kontakttaste) der ersten Sende-/Empfangseinheit erste abgespeicherte Datensätze übertragbar sind und bei Betätigung der Eingabetaste 9 an der zweiten Sende/Empfangseinheit bei Empfang der gesendeten ersten Datensätze automatisch ein Signal erzeugt und zurückgesendet wird, um die geplante Kontaktaufnahme abzubrechen. Diese Funktion kann insbesondere dann von Vorteil sein, wenn die kontaktierte Person sich gerade in Gesellschaft anderer Personen befindet und im Augenblick nicht gestört werden möchte. Dabei ist es vorgesehen, daß die Sende/Empfangseinheit 1 nicht vollkommen ausgeschaltet werden muß, sondern lediglich auf einen "harmlosen" Suchmodus umgeschaltet werden kann, der z. B. dadurch gekennzeichnet ist, daß der Signalgeber 13 nur ein visuelles Signal auf der Anzeigeeinrichtung 12 abgibt und keinen Ton oder Vibrationsalarm.

Bei durch die Vergleichereinrichtung 7 festgestellten übereinstimmenden Datensätzen können durch Betätigen einer weiteren Eingabetaste 10 der Sende/Empfangseinheit stufenweise Datenteilmengen aus dem Speicher 6 der anderen Sende-/Empfangseinheit 1 abgefragt werden. Bei jedem Drücken der Eingabetaste 10 wird dabei eine Datenteilmenge (z. B. lediglich der Name oder das Hobby oder das Alter usw.) abgefragt. Ebenso ist es von der sendenden Person aus möglich, daß diese bestimmte Datenmengen gezielt stufenweise z. B. mittels der Eingabetaste 8 freigibt. Die sendende Person kann somit zunächst abwarten, ob überhaupt Interesse an einer Kontaktaufnahme besteht ohne sofort ihre sämtlichen Daten preiszugeben.

Eine Datenübertragung erfolgt erst bei Betätigen der jeweiligen Kontakttaste 8 an beiden Sende-/Empfangseinheiten 1 innerhalb einer bestimmten Zeitspanne. Damit wird vermieden, daß nur eine Person ihre Daten freigibt und die andere Person ihre Daten für sich behält.

Die Sende-/Empfangseinheit 1 ist ferner durch die zweckmäßige Funktion gekennzeichnet, daß bestimmte empfangene Daten vor dem Vergleich in der Vergleichereinrichtung 7 ausschließbar sind. Beispielsweise kann der Benutzer bereits bekannte Identifikationsnummern anderer Sende-/Empfangseinheiten ausschließen. Eine weitere Funktion der Sende-/Empfangseinheit 1 besteht darin, daß unterschiedliche Daten unterschiedlich gewichtet werden können. So ist z. B. für eine Person das Hobby der anderen Person wichtiger als deren Alter oder Name. Eine effektivere Kontaktanbahnung wird damit ermöglicht. In diesem Rahmen ist es auch vorgesehen, daß beim Empfang oder fehlenden Empfang von bestimmten Daten trotz Übereinstimmung der anderen Daten kein Signal ausgelöst wird. Ist z. B. der Benutzer an einer Kontaktaufnahme mit einem bestimmten Geschlecht nicht interessiert, so kann er dieses von vorneherein ausschließen.

Weiterhin können bestimmte Suchprofile für bestimmte Zwecke (z. B. Partnersuche, Suche von Hobbypartnem usw.) festlegbar und/oder abrufbar sein. Ein in die Sende-/Empfangseinheit 1 integriertes Navigationssystem 14 ermöglicht auf unterschiedliche Lokalitäten zugeschnittene Suchprofile. Außerdem dient das Navigationssystem 14 der besseren Orientierung. Entsprechend können bestimmte Suchprofile ortsabhängig definierbar sein. Mittels des Navigationssystems 14 ist auch der aktuelle Standort der Sende/Empfangseinheit 1 an eine andere Sende-/Empfangseinheit 1 übermittelbar.

Zusätzlich kann auch mindestens ein besonderes aktuelles Merkmal des Benutzers einer Sende-/Empfangseinheit 1 an eine andere Sende-/Empfangseinheit 1 übermittelbar sein. Der Benutzer gibt dabei z. B. eine Kurzbeschreibung seiner Kleidung über die Tastatur 11 in seine Sende-/Empfangseinheit 1 ein und gibt diese Daten an die kontaktierte Person frei.

Eine besonders effektive Suche wird dadurch ermöglicht, daß der Grad der Übereinstimmung der miteinander verglichenen Daten bestimmbar ist und auf der Anzeigeeinrichtung 12 ablesbar ist.

Gegen unbefugte Benutzung oder unbefugte Einsicht in die Datenbank ist eine Schutzfunktion mittels eines Paßwortes vorgesehen.

Die Sende-/Empfangseinheit 1 ist UMTS (Universal Mobile Telecommunications System)-fähig und ermöglicht damit eine optimale Datenübertragung.

Zu ergänzen ist, daß bei der erfindungemäßen Sende-/Empfangseinheit bestimmte Datenmengen gezielt stufenweise freigebbar sind und daß vorzugsweise durch Betätigen der Eingabetaste 8 jede Stufe an Datenmengen gesondert freigebbar ist. Ferner ist es möglich, bestimmte Suchprofile für bestimmte Zwecke (z.B. Partnersuche, Suche von Hobby-Partnern usw.) festlegbar und/oder abrufbar sind.

Bei einer weiteren bevorzugten Ausführungsform ist es möglich, ein Navigationssystem 14 und/oder das Ortungssystem (z.B. GPS oder dgl.) zu integrieren.

Ferner ist es vorzugsweise möglich, mindestens ein besonderes aktuelles Merkmal des Benutzers einer Sende-/Empfangseinheit 1 an eine andere Sende-/Empfangseinheit 1 zu übermitteln.

Bei einer weiteren, besonders bevorzugten Ausführungsform der erfindungsgemäßen Sende-/Empfangseinheit ist es möglich, daß der Grad der Übereinstimmung der miteinander verglichenen Daten auf der Anzeigeeinrichtung 12 ablesbar ist.

Desweiteren kann eine Schutzfunktion (z.B. mittels Paßwort) gegen unbefugte Benutzung oder unbefugte Einsicht in die Datenbank vorgesehen sein.

Schließlich ist es möglich, daß die Sende-/Empfangseinheit 1 UMTS-fähig (Universal Mobile Telecommuncation System) oder UMTS-vergleichbar ist.

### BEZUGSZEICHENLISTE

- 1: Sende-/Empfangseinheit
- 2: Mikroprozessor
- 3: Sendeeinheit
- 4: Empfangseinheit
- 5: Codier-/Decodiervorrichtung
- 6: Speicher
- 6': Speicherelement
- 7: Vergleichereinrichtung
- 8: Eingabetaste
- 9: Eingabetaste
- 10: Eingabetaste
- 11: Tastatur
- 12: Anzeigeeinrichtung
- 13: Signalgeber
- 14: Navitgationssystem

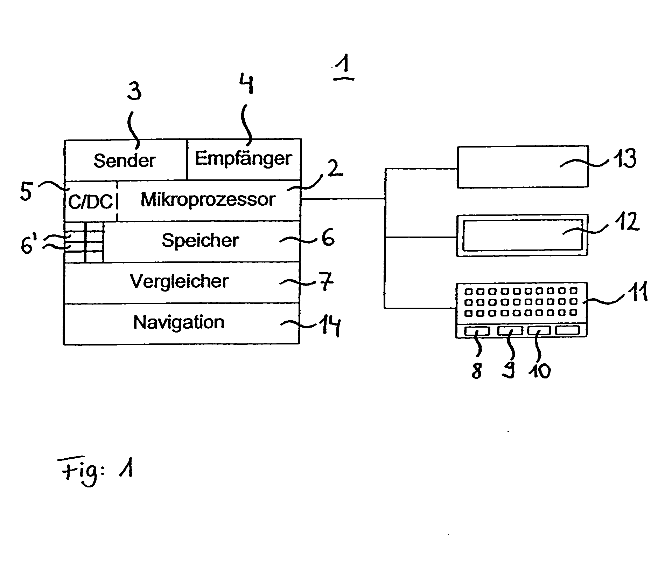

## Patentansprüche

1. Mobile, am Körper tragbare, codierbare Sende-/Empfangseinheit zur Telekommunikation per Sprachübertragung und/oder Datenübertragung, umfassend eine von einem Mikroprozessor (2) gesteuerte Sendeeinheit (3), eine von dem Mikroprozessor (2) gesteuerte Empfangseinheit (4) und eine Codier/Decodiervorrichtung (5) zum Festlegen mindestens eines Sendecodes und zur Überprüfung von Empfangscodierungen sowie Speicherelementen (6'), in welchen zur Absendung vorbereitete und/oder empfangene Codes und/oder Sprachdaten speicherbar sind, wobei eine Vergleichereinrichtung (7) vorgesehen ist, durch welche codierte Daten von zwei im wesentlichen gleichartigen, derartigen Sende/Empfangseinheiten (1) auf zumindest teilweise Übereinstimmung vergleichbar sind und bei zumindest teilweiser Übereinstimmung ein Signal auslösbar ist,
**dadurch gekennzeichnet, daß**
beim Feststellen von teilweiser Übereinstimmung abgespeicherter Datensätze in beiden Sende-/Empfangseinheiten (1) durch Betätigen einer Eingabetaste (8) (Kontakttaste) der ersten Sende-/Empfangseinheit (1) erste abgespeicherte Datensätze übertragbar sind und bei Betätigung einer Eingabetaste (9) an der zweiten Sende-/Empfangseinheit (1) bei Empfang der gesendeten ersten Datensätze automatisch ein Signal erzeugt und zurückgesendet wird, um die geplante Kontaktaufnahme abzubrechen.

2. Sende-/Empfangseinheit nach Anspruch 1,
**dadurch gekennzeichnet, daß**
bei durch die Vergleichereinrichtung (7) festgestellten übereinstimmenden Datensätzen durch Betätigen einer Eingabetaste (10) einer Sende-/Empfangseinheit (1) stufenweise Datenteilmengen aus dem Speicher (6) der anderen Sende-/Empfangseinheit (1) abgefragt werden können.

3. Sende-/Empfangseinheit nach einem der vorhergehenden Ansprüche,
**dadurch gekennzeichnet, daß**
eine Datenübertragung erst bei Betätigen der jeweiligen Kontakttaste (8) an beiden Sende-/Empfangseinheiten (1) innerhalb einer bestimmten Zeitspanne erfolgt.

4. Sende-/Empfangseinheit nach einem der vorhergehenden Ansprüche,
**dadurch gekennzeichnet, daß**
bestimmte empfangene Daten vor dem Vergleich in der Vergleichereinrichtung (7) ausschließbar sind.

5. Sende-/Empfangseinheit nach einem der vorhergehenden Ansprüche,
**dadurch gekennzeichnet, daß**
unterschiedliche Daten unterschiedlich gewichtet sind.

6. Sende-/Empfangseinheit nach einem der vorhergehenden Ansprüche,
**dadurch gekennzeichnet, daß**
beim Empfang oder fehlendem Empfang von bestimmten Daten (Merkmale, Eigenschaften usw.) trotz Übereinstimmung der anderen Daten kein Signal auslösbar ist.

7. Sende-/Empfangseinheit nach einem der vorhergehenden Ansprüche,
**dadurch gekennzeichnet, daß**
bestimmte Suchprofile ortsabhängig definierbar sind.

8. Sende-/Empfangseinheit nach einem der vorhergehenden Ansprüche,
**dadurch gekennzeichnet, daß**
der aktuelle Standort der Sende-/Empfangseinheit (1) an eine andere Sende/Empfangseinheit (1) übermittelbar ist.

9. Sende-/Empfangseinheit nach einem der vorhergehenden Ansprüche,
**dadurch gekennzeichnet, daß**
der Grad der Übereinstimmung der miteinander verglichenen Daten bestimmbar ist.

10. Verfahren zur Telekommunikation per Sprachübertragung und/oder Datenübertragung mittels mindestens zwei Sende-/Empfangseinheiten gemäß mindestens einem der Ansprüche 1 - 9, wobei Sendecodes in einer ersten Sende-/Empfangseinheit festgelegt und an eine zweite Sende-/Empfangseinheit gesendet werden, in welcher ein Vergleich der gesendeten mit abgespeicherten Daten auf zumindest teilweise Übereinstimmung stattfindet und bei zumindest teilweiser Übereinstimmung ein Signal auslöst,
**dadurch gekennzeichnet, daß**
beim Feststellen von teilweiser Übereinstimmung abgespeicherter Datensätze in beiden Sende-/Empfangseinheiten durch Betätigen einer Eingabetaste (Kontakttaste) der ersten Sende-/Empfangseinheit erste abgespeicherte Datensätze übertragen werden und bei Betätigung einer Eingabetaste an der zweiten Sende-/Empfangseinheit bei Empfang der gesendeten ersten Datensätze automatisch ein Signal erzeugt und zurückgesendet wird, um die geplante Kontaktaufnahme abzubrechen.

11. Verfahren nach Anspruch 10, bei welchem mindestens eines der Merkmale der Ansprüche 2 - 9 realisiert wird.
